# EUROPEAN PATENT SPECIFICATION

(11) **EP 3 750 789 B1**
(45) Date of publication and mention of the grant of the patent: **25.10.2023**
(21) Application number: 20176753.0
(22) Date of filing: 27.05.2020
(51) Int. Cl.: B63B 1/40, B63H 5/14, B63H 5/15

(54) **VESSEL**
SCHIFF
BATEAU

(30) Priority: 28.05.2019 NL 2023222
(43) Date of publication of application: 16.12.2020
(73) Proprietor: Noorman, Hilbert, 7946 LZ Wanneperveen (NL)
(72) Inventor: Noorman, Hilbert, 7946 LZ Wanneperveen (NL)
(74) Representative: Arnold & Siedsma

(56) References cited:
- CN-A- 1 095 999
- FR-A- 693 618
- US-A- 1 726 962
- US-A- 2 812 738
- US-A1- 2002 037 675

## Description

The invention relates to a vessel, such as a ship or boat, comprising a hull and a rotatable screw for driving the vessel.

Such a vessel is per se known, for example in document FR693618.

It is an object of the invention to improve the per se known vessel. It can be a particular object of the invention to reduce at least the relative fuel consumption of the vessel.

This object can be achieved with a vessel according to the preamble, which is characterized in that the vessel comprises a tunnel, which tunnel is disposed at least partially in the hull, and that the hull comprises a water inlet and water outlet connected to the tunnel, and that the screw is disposed in the tunnel.

The screw is usually disposed behind the vessel. This can cause the vessel to pitch to some extent and the front side of the vessel to move upward to some extent, which can be detrimental to fuel consumption. The vessel according to the invention, with the tunnel disposed in the hull and the screw disposed in the tunnel, obviates this drawback. Alternatively or additionally, a bow wave occurring with the per se known vessel can be reduced or prevented by water flowing into the water inlet, which saves energy.

In an embodiment of the vessel according to the invention a part of the tunnel lies above the waterline, at least in use of the vessel.

The waterline is understood to mean the water level of the water in which the vessel lies, for instance a sea, lake, river or canal. Depending on the weight of a possible cargo of the vessel, the hull of the vessel lies higher or lower relative to the waterline. It can be the case that a part of the tunnel lies at least in use of the vessel above the waterline at least in an unloaded state of the vessel, and optionally also in a loaded and more particularly in a maximally loaded state. The maximally loaded state can for instance be a specified maximally loaded state, wherein the maximum tonnage is for instance defined.

The water inlet and/or water outlet can lie below the waterline. Alternatively or additionally, the screw can be disposed in a part of the tunnel lying above the water inlet and/or the water outlet. The screw can therefore lie at least partially above the water inlet and/or outlet.

According to an aspect of the invention, said part of the tunnel lying above the waterline can be filled at least partially, and preferably substantially wholly, with water, whereby the water level in the tunnel can be higher than said waterline. An advantage hereof is that the screw disposed in the tunnel can extend partially above the waterline and still be situated in water. The screw can hereby be embodied with a larger diameter than in the per se known vessel, whereby driving of the vessel according to the invention can take place more efficiently and/or with less slip than in the per se known vessel. The diameter of the screw can particularly be two to three times greater than for the per se known vessel. In particular, 50% to 75% of the screw area can extend above the waterline. At least partially filling said part of the tunnel with water can be achieved through different measures, individually or in combination, as will be further elucidated hereinbelow.

The vessel comprises for instance an air outlet connected to an upper end zone of said part of the tunnel for the purpose of letting air out of the tunnel such that, at least in use of the vessel, said part of the tunnel is at least partially filled with water and the water level in the tunnel is higher than said waterline.

By letting air out of the tunnel the tunnel can be filled with water, whereby the water level in the tunnel can be higher than the waterline. The air outlet is connected to an upper end zone of the tunnel. The air outlet is more preferably connected to a top of the tunnel.

The air outlet is preferably disposed close to the screw, for instance above the screw.

The vessel can further be provided with an air pump for suctioning air via the air outlet out of said part of the tunnel.

By suctioning air out of the tunnel an underpressure is created in the tunnel, and the tunnel, particularly said part of the tunnel, can be filled substantially wholly with water. By suctioning air out of the tunnel a pressure in the tunnel can particularly be around -1 bar, whereby the water level in the tunnel can be higher than the waterline.

The vessel can further comprise a float switch configured to control the air pump. The float switch can particularly be configured to control the air pump on the basis of a water level in the tunnel by switching the pump on, or not. More particularly, the float switch can be configured to switch the air pump on for the purpose of suctioning air from the tunnel when or as soon as the water level lies at or below a determined minimum level, such that by suctioning air out of the tunnel the water level in the tunnel can rise to or above the determined minimum level, and wherein the float switch can be configured to switch the air pump off as soon as the minimum level has been reached. The minimum level can be chosen as desired and for instance define a substantially wholly filled tunnel, i.e. be determined to lie close to the top of the tunnel.

In yet another embodiment of the vessel according to the invention the screw is disposed substantially vertically, wherein the screw extends into said part of the tunnel and thereby extends partially above said waterline.

As elucidated above, the screw disposed in the tunnel can here be situated at least substantially wholly in water, despite the screw extending partially above said waterline. The screw can hereby be embodied with a relatively large diameter relative to the screw of the per se known vessel, since in the per se known vessel the maximum dimensions of the screw are usually chosen such that the screw does not extend above the waterline.

The tunnel can be arranged at any suitable location in the hull of the vessel. The tunnel can for instance be disposed at least partially in a fore of the vessel.

The water inlet can be arranged at any desired location on the hull of the vessel. In practical manner the water inlet is disposed at the bow of the vessel.

The water inlet is preferably arranged on the hull of the vessel such that the water inlet lies substantially wholly below the waterline in use, particularly also when the vessel is unloaded and therefore floats relatively high on the water. In other words, the water inlet is preferably arranged at a relatively low position on the hull of the vessel, more particularly on a lower zone of the hull.

It is advantageous here for a width dimension of the water inlet to be greater than a height dimension of the water inlet. By providing a water inlet with a greater width dimension than height dimension a water inlet with a relatively large cross-sectional dimension yet still a limited height dimension can be provided, whereby the water inlet can extend substantially wholly below the waterline in relatively simple manner.

A maximum width dimension of the water inlet can particularly be twice as great as a maximum height dimension, more particularly three times as great, still more particularly four times as great.

The water inlet can particularly have a substantially elongate form, for instance a substantially elongate rectangular or oval form, wherein a longitudinal axis of the water inlet is disposed substantially horizontally.

In practical manner the width dimension of the water inlet can substantially correspond with a width of the vessel. In this way the height dimension can be limited as much as possible.

In yet another embodiment of the vessel according to the invention a part of the tunnel extends from the bow in a navigation direction. The tunnel particularly protrudes in a forward direction. An advantage of having the tunnel protrude from the hull is that the tunnel takes up less space in the hull relative to a tunnel disposed wholly in the hull.

In yet another embodiment of the vessel according to the invention the tunnel has a width dimension which, as seen in a direction from the front to the rear, first decreases to a minimum width dimension and then increases again, and a height dimension which, as seen in a direction from the front to the rear, first increases to a maximum height dimension in the area of the minimum width dimension and then decreases again, and wherein the screw is disposed in an area of the tunnel with the minimum width dimension and maximum height dimension.

As elucidated above, with a view to disposing the water inlet below the waterline it is advantageous for the water inlet to be wider than it is high. The propeller however has a substantially round cross-sectional form, whereby the tunnel preferably has a round cross-sectional form in the area where the propeller is disposed. It is hereby advantageous for the tunnel to have the above described form, wherein the width first decreases and then increases again, and the height conversely first increases and then decreases again, and wherein the tunnel has a substantially round cross-sectional form in the area of the minimum width dimension and maximum height dimension.

It has been found by applicant that the area of the minimum width dimension and maximum height dimension of the tunnel is preferably disposed where a curve of the bow of the vessel ends and a substantially straight longitudinal side of the vessel begins. In other words, the area of the minimum width dimension and maximum height dimension of the tunnel can preferably be disposed at the position where the hull of the vessel reaches its substantially maximum width dimension, as seen from the front to the rear.

It has further been found by applicant that, although the water is displaced upward to some extent by the increasing height dimension, this entails no or almost no energy loss because the water moves back downward after leaving the propeller.

It is noted that such a tunnel form can leave space free in the hull on the outer side of the tunnel, which space can for instance be used as ballast space.

The tunnel particularly has a form such that a cross-sectional area dimension of the tunnel remains substantially the same as seen from the front to the rear. In this way the water can flow through the tunnel at a substantially constant flow rate.

The water outlet can be arranged at any suitable location on the hull of the vessel. The water outlet is preferably arranged such that it lies below the waterline, particularly even in an unloaded state of the vessel. The water outlet can for instance be disposed on an underside of the hull.

In practical manner, the water inlet can be provided with a screen or filter.

As elucidated above, the propeller of the vessel according to the invention can take a relatively large form. The propeller can for instance have a diameter of about 4 m for a vessel of a determined size. A per se known vessel of a similar size can have a propeller with a diameter of about 1.75 m, which shows that the propeller can be two to three times larger than for a conventional vessel.

The invention can further relate to the use of a vessel according to any one of the claims 1-15 and/or as described above on the basis of one or more embodiments. The use can for instance comprise of suctioning air out of the tunnel, for instance on the basis of a water level in the tunnel, more particularly for instance by using the float switch and controlling the air pump on the basis of a water level in the tunnel.

The invention is further elucidated below with reference to the accompanying schematic figures, in which:
Figure 1 shows schematically a perspective front view of a fore of a vessel according to the invention;
Figure 2 shows schematically a vertical longitudinal section through the fore of the vessel of figure 1, and
Figure 3 shows schematically a horizontal longitudinal section through the fore of the vessel of figure 1, in which a screw of the ship is projected in front view.

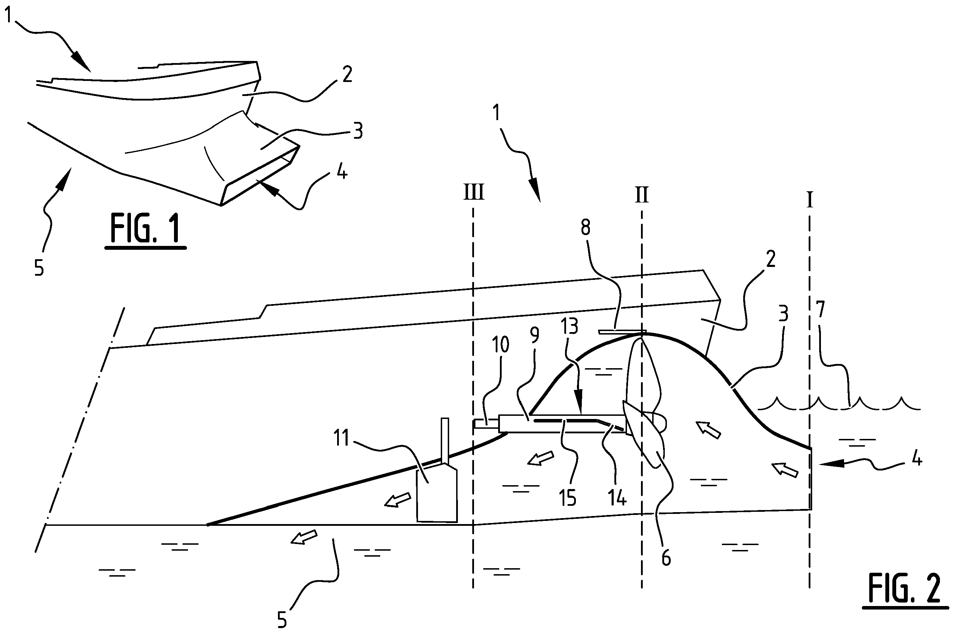

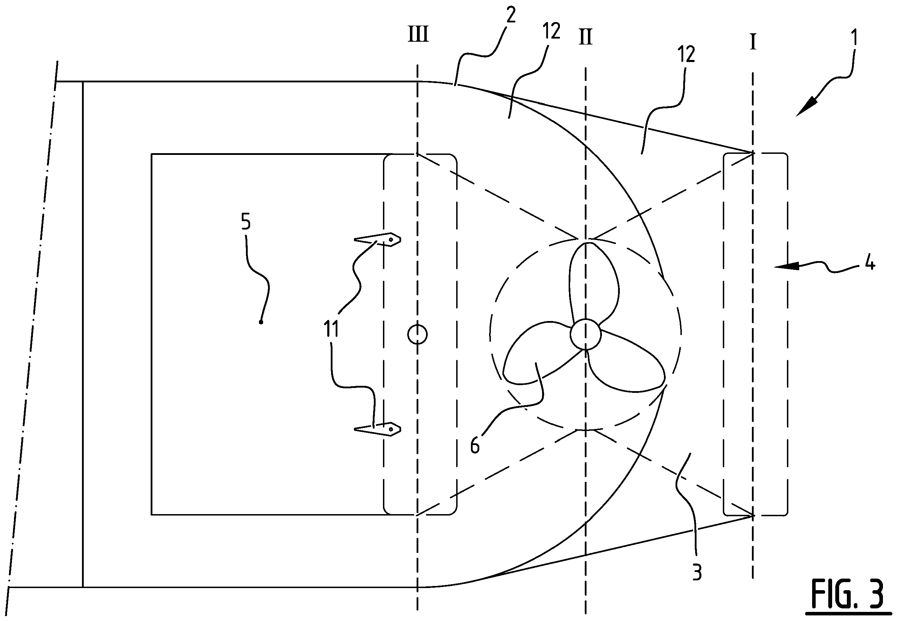

Figures 1-3 show a fore of a vessel 1 with a hull 2. A tunnel 3 extends through the interior of hull 2, which tunnel 3 is thereby disposed at least partially in the hold of vessel 1. Tunnel 3 protrudes from the bow of the vessel in a forward navigation direction. The tunnel has on its front side a water inlet 4 and on an underside of hull 2 of vessel 1 a water outlet 5. Disposed in tunnel 3 is a screw 6 for driving vessel 1. As shown in figures 1 and 2, in the area of water inlet 4 and water outlet 5 tunnel 3 is, and water inlet 4 and water outlet 5 themselves thereby are, relatively wide and low, i.e. a width dimension thereof is greater than a height dimension. As seen in a rearward direction from water inlet 4, the width of tunnel 3 decreases to a minimum width dimension in an area of screw 6, and the height of tunnel 3 increases to a maximum height dimension in said area of screw 6. Downstream of screw 6 the width of tunnel 3 once again increases, and the height thereof decreases. A cross-sectional area of tunnel 3 is hereby substantially constant over the length of tunnel 3. Because tunnel 3 is relatively high in the area of screw 6, a part of tunnel 3 extends above a waterline 7 of the water, such as for instance a sea, lake, canal or river, in which vessel 1 is travelling. An air outlet 8 is arranged on an upper side of tunnel 3 in the area of screw 6, via which air outlet 8 and using an air pump (not shown) air can be suctioned out of tunnel 3. Because an underpressure, for instance of about -1 bar, is created in tunnel 3 in this manner, the water level in tunnel 3 can rise to a level above the waterline 7. Tunnel 3, and more particularly also said part of tunnel 3 lying above waterline 7, can particularly be wholly filled with water. Screw 6, which extends partially above waterline 7, hereby still extends wholly in water during use. A float switch, which is configured to control the air pump, particularly on the basis of the water level in tunnel 3, can for instance be arranged close to air outlet 8.

As further shown in figures 1-3, the screw 6 is connected via a screw shaft 10 extending in a stern tube 9 to an engine (not shown) for the purpose of rotatingly driving screw 6. In this way the engine can be disposed outside tunnel 3, for instance in the hull 2 of the vessel. Stern tube 9 is connected to tunnel 3 by means of supports 13, wherein one support 13 is visible in figure 2. Supports 13 comprise a front part 14 which is disposed obliquely relative to a longitudinal direction of vessel 1 in a direction in which the water is thrust spirally rearward by screw 6. Each support 13 has a bend or kink, wherein a rear part 15 of each support 13 is disposed parallel to the longitudinal direction of vessel 1. In this way the spiral displacement of the water is terminated or at least reduced, and the water will flow in the longitudinal direction of the vessel 1 aft of the bend. A number of supports 13 differing from the number of blades of screw 6 is preferably opted for, and supports 13 are preferably disposed distributed at equal angular distances over the periphery of the stern tube 9. If screw 6 comprises for instance four blades, stern tube 9 is connected using three supports 13 which are arranged spaced 120° apart. If screw 6 comprises for instance three blades, stern tube 9 is connected using four supports 13 which are arranged spaced 90° apart. Resonance can be reduced by opting for a number of supports different from the number of blades. In this example two rudders 11 are arranged downstream of screw 6 for the purpose of steering vessel 1. As is also shown in figures 1-3, a space 12 is present outside tunnel 3, which space can for instance serve as storage space or ballast space.

Although the invention is elucidated above on the basis of a number of specific examples and embodiments, the invention is not limited thereto. The invention covers the subject matter defined by the following claims.

## Claims

1. Vessel (1), such as a ship or boat, comprising a hull (2) and a rotatable screw (6) for driving the vessel, wherein the vessel comprises a tunnel (3), which tunnel is disposed at least partially in the hull, and that the hull comprises a water inlet (4) and water outlet (5) connected to the tunnel, and that the screw is disposed in the tunnel, wherein the tunnel is disposed at least partially in a fore of the vessel, wherein a part of the tunnel lies above the waterline (7), at least in use of the vessel, wherein the tunnel has a width dimension which, as seen in a direction from the front to the rear, first decreases to a minimum width dimension and then increases again, and a height dimension which, as seen in a direction from the front to the rear, first increases to a maximum height dimension in the area of the minimum width dimension and then decreases again, and wherein the screw is disposed in an area of the tunnel with the minimum width dimension and maximum height dimension, wherein a cross-sectional dimension of the tunnel remains substantially the same as seen from the front to the rear.

2. Vessel according to claim 1, wherein the area of the minimum width dimension and maximum height dimension of the tunnel is disposed at the position where the hull (2) of the vessel reaches its substantially maximum width dimension, as seen from the front to the rear.

3. Vessel according to claim 1 or 2, wherein the vessel comprises an air outlet (8) connected to an upper end zone of said part of the tunnel for the purpose of letting air out of the tunnel such that, at least in use of the vessel, said part of the tunnel is at least partially filled with water and the water level in the tunnel is higher than said waterline.

4. Vessel according to claim 3, further provided with an air pump for suctioning air via the air outlet out of said part of the tunnel.

5. Vessel according to claim 4, comprising a float switch configured to control the air pump.

6. Vessel according to any one of the preceding claims, wherein the screw is disposed substantially vertically, and wherein the screw extends into said part of the tunnel and thereby extends partially above said waterline.

7. Vessel according to claim 6, wherein the screw lies at least partially above the water inlet.

8. Vessel according to any one of the foregoing claims, wherein the water inlet is disposed at the bow of the vessel.

9. Vessel according to any one of the foregoing claims, wherein a width dimension of the water inlet is greater than a height dimension of the water inlet.

10. Vessel according to any one of the foregoing claims, wherein a or the width dimension of the water inlet substantially corresponds with a width of the vessel.

11. Vessel according to any one of the foregoing claims, wherein a part of the tunnel protrudes from the bow in a navigation direction.

12. Vessel according to any one of the foregoing claims, wherein the water outlet is disposed on an underside of the hull.

13. Vessel according to any one of the foregoing claims, wherein the water inlet is provided with a screen or filter.

## Patentansprüche

1. Wasserfahrzeug (1), wie z.B. ein Schiff oder Boot, mit einem Rumpf (2) und einer drehbaren Schraube (6) zum Antrieb des Wasserfahrzeugs, wobei das Wasserfahrzeug einen Tunnel (3) aufweist, der zumindest teilweise im Rumpf angeordnet ist, und wobei der Rumpf einen Wassereinlass (4) und einen Wasserauslass (5) aufweist, welche mit dem Tunnel verbunden sind, und wobei die Schraube in dem Tunnel angeordnet ist, wobei der Tunnel zumindest teilweise in einem vorderen Teil des Wasserfahrzeugs angeordnet ist, wobei ein Tunnelabschnitt zumindest im Betrieb des Wasserfahrzeugs oberhalb der Wasseroberfläche (7) liegt, wobei der Tunnel eine Breitenabmessung aufweist, welche, in einer Richtung von vorne nach hinten gesehen, zunächst auf eine minimale Breitenabmessung abnimmt und dann wieder zunimmt, und eine Höhenabmessung aufweist, welche, in einer Richtung von vorne nach hinten gesehen, zunächst auf eine maximale Höhenabmessung im Bereich der minimalen Breitenabmessung zunimmt und dann wieder abnimmt, und wobei die Schraube in dem Bereich des Tunnels mit der minimalen Breitenabmessung und der maximalen Höhenabmessung angeordnet ist, wobei die Querschnittsabmessung des Tunnels, in einer Richtung von vorne nach hinten gesehen, im Wesentlichen gleich bleibt.

2. Wasserfahrzeug nach Anspruch 1, wobei der Bereich der minimalen Breitenabmessung und der maximalen Höhenabmessung des Tunnels sich an der Stelle befindet, an der der Rumpf (2) des Schiffes, von vorne nach hinten gesehen, seine im Wesentlichen maximale Breitenabmessung erreicht.

3. Wasserfahrzeug nach Anspruch 1 oder 2, wobei das Wasserfahrzeug einen Luftauslass (8) aufweist, der mit einem oberen Endbereich des Tunnelabschnitts verbunden ist, um Luft aus dem Tunnel entweichen zu lassen, so dass zumindest im Betrieb des Wasserfahrzeugs der besagte Tunnelabschnitt zumindest teilweise mit Wasser gefüllt ist und der Wasserspiegel im Tunnel höher als die Wasseroberfläche ist.

4. Wasserfahrzeug nach Anspruch 3, ferner aufweisend eine Luftpumpe zum Ansaugen von Luft aus dem besagten Tunnelabschnitt über den Luftauslass.

5. Wasserfahrzeug nach Anspruch 4, aufweisend einen Schwimmerschalter, der zur Steuerung der Luftpumpe ausgebildet ist.

6. Wasserfahrzeug nach einem der vorherigen Ansprüche, wobei die Schraube im Wesentlichen vertikal angeordnet ist und sich in den besagten Tunnelabschnitt hinein erstreckt und dadurch teilweise über die Wasseroberfläche hinausragt.

7. Wasserfahrzeug nach Anspruch 6, wobei sich die Schraube zumindest teilweise über dem Wassereinlass befindet.

8. Wasserfahrzeug nach einem der vorherigen Ansprüche, wobei sich der Wassereinlass am Bug des Wasserfahrzeugs befindet.

9. Wasserfahrzeug nach einem der vorherigen Ansprüche, wobei die Breitenabmessung des Wassereinlasses größer ist als die Höhenabmessung des Wassereinlasses.

10. Wasserfahrzeug nach einem der vorherigen Ansprüche, wobei eine oder die Breitenabmessung des Wassereinlasses im Wesentlichen einer Breite des Wasserfahrzeugs entspricht.

11. Wasserfahrzeug nach einem der vorherigen Ansprüche, wobei ein Teil des Tunnels in Fahrtrichtung aus dem Bug herausragt.

12. Wasserfahrzeug nach einem der vorherigen Ansprüche, wobei der sich der Wasserauslass an der Unterseite des Rumpfes befindet.

13. Wasserfahrzeug nach einem der vorherigen Ansprüche, wobei der Wassereinlass mit einem Sieb oder Filter versehen ist.

## Revendications

1. Bateau (1), tel qu'un vaisseau ou navire, comprenant une coque (2) et une hélice pouvant tourner (6) afin d'entraîner le bateau, dans lequel le bateau comprend un tunnel (3), lequel tunnel est disposé au moins partiellement dans la coque, et dans lequel la coque comprend une entrée d'eau (4) et une sortie d'eau (5) reliées au tunnel, et dans lequel l'hélice est disposée dans le tunnel,
dans lequel le tunnel est disposé au moins partiellement à l'avant du bateau,
dans lequel une partie du tunnel est située au-dessus de la ligne de flottaison (7), au moins au cours de l'utilisation du bateau,
dans lequel le tunnel présente une dimension transversale qui, tel que vu suivant une direction longitudinale, diminue en premier vers une dimension transversale minimum et augmente ensuite de nouveau, et une dimension verticale qui, tel que vu suivant une direction longitudinale, augmente en premier vers une dimension verticale maximum dans la zone de la dimension transversale minimum et diminue ensuite de nouveau, et dans lequel l'hélice est disposée dans une zone du tunnel présentant la dimension transversale minimum et la dimension verticale maximum, dans lequel une dimension transversale du tunnel reste sensiblement identique tel que vu de l'avant vers l'arrière.

2. Bateau selon la revendication 1, dans lequel la zone de la dimension transversale minimum et la dimension verticale maximum du tunnel est disposée à la position dans laquelle la coque (2) du bateau atteint sa dimension transversale sensiblement maximum, telle que vue de l'avant vers l'arrière.

3. Bateau selon la revendication 1 ou 2, dans lequel le bateau comprend une sortie d'air (8) reliée à une zone d'extrémité supérieure de ladite partie du tunnel dans le but de laisser l'air sortir du tunnel de telle sorte que, au moins au cours de l'utilisation du bateau, ladite partie du tunnel est au moins partiellement remplie d'eau et le niveau d'eau dans le tunnel est plus élevé que la ligne de flottaison.

4. Bateau selon la revendication 3, comportant, en outre, un compresseur destiné à aspirer l'air par l'intermédiaire de la sortie d'air et de l'extraire de ladite partie du tunnel.

5. Bateau selon la revendication 4, comprenant un commutateur à flotteur configuré de manière à commander le compresseur.

6. Bateau selon l'une quelconque des revendications précédentes, dans lequel l'hélice est disposée sensiblement verticalement et dans lequel l'hélice s'étend dans ladite partie du tunnel et s'étend ainsi partiellement au-dessus de ladite ligne de flottaison.

7. Bateau selon la revendication 6, dans lequel l'hélice est située au moins partiellement au-dessus de l'entrée d'eau.

8. Bateau selon l'une quelconque des revendications précédentes, dans lequel la sortie d'eau est disposée au niveau de la proue du bateau.

9. Bateau selon l'une quelconque des revendications précédentes, dans lequel une dimension transversale de l'entrée d'eau est supérieure à une dimension verticale de l'entrée d'eau.

10. Bateau selon l'une quelconque des revendications précédentes, dans lequel une ou la dimension transversale de l'entrée d'eau correspond sensiblement à une largeur du bateau.

11. Bateau selon l'une quelconque des revendications précédentes, dans lequel une partie du tunnel s'étend à partir de la proue suivant une direction de navigation.

12. Bateau selon l'une quelconque des revendications précédentes, dans lequel la sortie d'eau est disposée sur une face inférieure de la coque.

13. Bateau selon l'une quelconque des revendications précédentes, dans lequel la sortie d'eau comporte un tamis ou filtre.
